# EUROPÄISCHE PATENTSCHRIFT

(11) **EP 2 044 348 B1**
(45) Veröffentlichungstag und Bekanntmachung des Hinweises auf die Patenterteilung: **24.02.2010**
(21) Anmeldenummer: 07724625.4
(22) Anmeldetag: 26.04.2007
(51) Int. Cl.: F16H 55/30

(54) **KETTENRAD MIT ALTERNIERENDEN TEILUNGSABSTÄNDEN**
SPROCKET WITH ALTERNATING PITCH SPACINGS
ROUE DENTÉE AVEC UNE ALTERNANCE D'INTERVALLES DE DIVISIONS

(30) Priorität: 25.07.2006 DE 102006034364
(43) Veröffentlichungstag der Anmeldung: 08.04.2009
(73) Patentinhaber: IWIS Motorsysteme GmbH & Co. KG, 81369 München (DE)
(72) Erfinder: RITZ, Andreas, 81379 München (DE)
(74) Vertreter: Grünecker, Kinkeldey, Stockmair & Schwanhäusser Anwaltssozietät
(86) Internationale Anmeldenummer: PCT/EP2007/003695
(87) Internationale Veröffentlichungsnummer: WO 2008/011924

(56) Entgegenhaltungen:
- EP-A2- 1 308 646
- WO-A-2006/042412
- WO-A2-03/048604
- DE-A1- 4 331 482
- DE-A1-102005 008 676
- DE-U1- 20 319 172

## Beschreibung

Die vorliegende Erfindung betrifft ein Kettenrad, insbesondere für einen Steuerkettentrieb mit einem kreisförmigen Zahnkranz mit einer Vielzahl von um den Umfang des Zahnkranzes verteilten einander abwechselnden Zähnen und Zahnlücken und unterschiedlichen Teilungsabständen. Des Weiteren betrifft die Erfindung einen entsprechenden Kettentrieb, insbesondere einen Steuerkettentrieb mit einer Antriebskette und mindestens einem derartigen Kettenrad.

Bei der Entwicklung von Kraftfahrzeugen gewinnt das NVH-Verhalten (noise, vibration and harshness) zunehmend an Bedeutung. Neben dem Wunsch der Käufer nach einen hohen Schwingungskomfort trägt auch eine geringere Geräusch- und Schwingungsbelastung des Fahrers zur aktiven Sicherheit bei. Zusätzlich beeinträchtigen insbesondere die Schwingungsbelastungen die Lebensdauer und die notwendige Dimensionierung der betroffenen Bauteile.

In einem Kraftfahrzeug treten eine Vielzahl von Komponenten gleichzeitig als Anregungsquellen für Schwingungen und Geräusche auf. Neben dem Verbrennungsmotor selbst sind dies der Antriebsstrang, das Getriebe, Lüfter, Ansauganlage, Abgasanlage sowie Reifen und Fahrwerk, wobei die Anteile der einzelnen Schall- und Schwingungsquellen nicht vernachlässigbar sind. Eine dominante Rolle dabei spielen jedoch die Schwingungs- und Geräuschanregungen des Antriebsstrangs, z.B. Drehschwingungen der Kurbel- und Nockenwelle, unregelmäßige Drehbewegungen des Schwungrads, Lagerbelastungen sowie Winkelgeschwindigkeitsänderungen und Drehmomentanregungen der Kurbelwelle. Diese dynamischen Belastungen des Antriebsstrangs, insbesondere eines Steuerkettentriebs von Verbrennungskraftmaschinen aus einem Kurbelwellenkettenrad, mindestens einem Nockenwellenkettenrad und einer Antriebskette, setzen sich dominant im gesamten Kraftfahrzeug fort und überlagern alle weiteren Schall- und Schwingungsquellen.

Die Reduzierung der dynamischen Belastung im Antriebsstrang, egal ob Zahnriemen- oder Zahnkettenantrieb, ist seit vielen Jahren ein Schwerpunkt in der Entwicklung von Verbrennungsmotoren. Dabei ist es aus der DE 37 39 336 C2 bekannt, Drehschwingungen durch den Einsatz eines Schwingungsdämpfers entgegenzuwirken, der jedoch einen beträchtlichen zusätzlichen Aufwand und Bauraum erfordert. In der DE 39 20 528 C1 wird vorgeschlagen, den von der Nockenwelle ausgehenden Wechselmomenten durch eine hydraulische Bremseinrichtung entgegenzuwirken. Für einen Zahnriemenantrieb beschreibt die DE 195 20 508 A1 eine unrunde Riemenscheibe, die als Nockenwellenriemenscheibe eingesetzt wird, um die Schwingungsanregungen zu verringern. Dabei hat die hier gezeigte unrunde Riemenscheibe vier vorstehende und vier zurückstehende Bereiche, die in regelmäßigen Abständen um die Riemenscheibe angeordnet sind. Darüber hinaus ist bereits aus der JP 10266868 A ein ovales Kurbelwellenritzel für einen Zahnriemen-Steuerantrieb bekannt. Die DE 202 20 367 U1 und die DE 203 19 172 U1 beschreiben darüber hinaus die Entwicklung einer nicht auf Zahnriemen beschränkten Synchronantriebsvorrichtung, die die dynamische Belastung des Antriebsstrangs durch ein entgegengesetztes schwankendes korrigierendes Drehmoment mittels eines nichtkreisförmigen Profils, insbesondere elliptischen Profils, an mindestens einem Zahnriemenrad verringert.

Belastungsreduzierte Steuerkettentriebe sind z.B. bereits auch aus der EP 907 041 B1 und der EP 1 308 646 A2 bekannt. Hier sind die Zahnlücken eines Kettenrads in ihrem Fußkreisdurchmesser, d.h. in der Radialposition, gegenüber einem herkömmlichen gleichförmigen Fußkreis versetzt. Auf diese Weise werden die radialen Eingriffspositionen der Kettengelenke zwischen den Kettenradzähnen variiert, während der Teilungsabstand zwischen den im Eingriff befindlichen Kettengelenken konstant bleibt. Dabei ist die Anordnung der Zahnlücken-Fußkreisdurchmesser entweder zufallsverteilt oder im Hinblick auf eine gleichmäßige Steuerkettenbelastung ausgewählt.

Darüber hinaus ist aus der DE 43 31 482 A2 ein Kettentrieb bekannt mit einer Kette aus Kettengliedern unterschiedlicher Länge und Kettenrädern mit einer entsprechend unterschiedlicher Zahnteilung. Die Reduzierung der Wiederholfolge des Eingriffs der Kette in die Zähne des Kettenrads verringert die periodische Schwingungsanregung und die Geräuschabstrahlung des Kettentriebs. Bedingt durch die unterschiedliche Länge der Kettenglieder wiederholt sich die Anordnung der unterschiedlichen Zahnteilung auf dem Kettenrad in der immer gleichen Anordnung. Zwar wird durch diesen Kettentrieb die Schwingungsenergie auf drei Frequenzen verteilt, jedoch sind sowohl die Herstellung des Kettenrads als auch der Kette aus Kettengliedern unterschiedlicher Länge kostenintensiv und insbesondere bei einem Austausch anfällig für Montagefehler.

Dokument DE 203 1972 offenbart ein gattungsgemäße Kettenrad des Anspruchs 1.

Viele der aus dem Stand der Technik bekannten Lösungen zur Reduzierung der Geräusch- und Schwingungsbelastung des Antriebstrangs haben sich im Rahmen ihres Einsatzes gut bewährt. Die derzeit intensiven Bemühungen, das NVH-Verhalten in Kraftfahrzeugen weiter zu verbessern, erfordern insbesondere auch bei der dominierenden Schall- und Schwingungsquelle des Antriebsstrangs weitere Entwicklungsbemühungen. Darüber hinaus ist die dynamische Belastung des Antriebs bei den bisher zur Verfügung stehenden Lösungen immer noch relativ hoch. Eine weitere Belastungsreduzierung im Steuertrieb ist daher wünschenswert und könnte über Downsizing-Effekte auch zu einer Kostenreduzierung im Bereich des Steuerantriebes führen.

Der vorliegenden Erfindung liegt daher die Aufgabe zu Grunde, die dynamische Belastung im Antriebsstrang, insbesondere in einem Steuerkettentrieb, zu reduzieren und dabei die Nachteile bekannter Lösungen zu vermeiden bei einer möglichst gleichen oder nur geringfügig reduzierten Wirksamkeit.

Diese Aufgabe wird mit einem gattungsgemäßen Kettenrad dadurch gelöst, dass mehrere aufeinander folgende Teilungsabstände, bevorzugt mindestens drei, über einen ersten Bereich des kreisförmigen Zahnkranzes kontinuierlich zunehmen und mehrere aufeinander folgende Teilungsabstände, bevorzugt mindestens drei in einem nach folgendem Bereich des kreisförmigen Zahnkranzes kontinuierlich abnehmen. Dabei kann die kontinuierliche Änderung des Teilungsabstands sowohl gleichförmig als auch ungleichförmig erfolgen, wobei prinzipiell ein sinusförmiger Verlauf der Teilungsabstände am sinnvollsten ist. Jedoch kann auch eine Stufenform der Teilungsabstände mit jeweils zwei Abstufungen bereits einen positiven Effekt erzielen. Zwischen den Bereichen mit kontinuierlich zunehmenden und kontinuierlich abnehmen Teilungsabständen können Bereiche mit einem konstanten Teilungsabstand, z.B. der mittleren Teilungen, angeordnet sein. Bevorzugt sind jedoch die alternierenden Bereiche einander angrenzend angeordnet, um einem möglichst positivem Wirkungsverlauf der Teilungsabstände zu erreichen.

Diese alternierende Anordnung der unterschiedlichen Teilungsabstände auf dem Zahnkranz in Drehrichtung des Kettenrads bewirkt im Steuerkettentrieb eine zusätzliche, der Schwingungsbelastung entgegen gerichtete Schwingungsanregung, wodurch die sich im Steuerkettentrieb ergebenden Kettenkräfte reduziert werden. Die Auslegung dieser gezielten zusätzlichen Anregung des Steuertriebs auf die Bereiche resonanter Stellen lässt die Kettenkräfte deutlich sinken und ermöglicht so neben einer Verbesserung des NVH-Verhaltens auch eine kleinere Dimensionierung des Steuerkettentriebs bei gleicher Leistungsfähigkeit und Eintrittsbedingungen.

Dabei können sich bevorzugt Bereiche des Zahnkranzes mit kontinuierlich zunehmenden Teilungsabständen und Bereiche des Zahnkranzes mit kontinuierlich abnehmenden Teilungsabständen einander abwechseln, um eine möglichst gleichmäßige Reduzierung der Kettenkräfte in einem Steuerkettentrieb zu erlangen.

Eine günstige Ausgestaltung des Kettenrads selbst oder als Teil eines Kettentriebs sieht vor, dass die Bereiche des Zahnkranzes mit kontinuierlich zunehmenden Teilungsabständen und/oder mit kontinuierlich abnehmenden Teilungsabständen mindestens vier unterschiedliche Teilungsabstände aufweisen. Die schrittweise Änderung der Teilungsabstände ermöglicht eine sich langsam aufbauende Schwingungsanregung bzw. einen langsamen Anstieg oder eine teilweise Kompensation der durch das Kettenrad im Steuerkettentrieb induzierten Kettenkraft.

Eine zweckmäßige Ausbildung des Kettenrads sieht vor, dass der Unterschied zwischen dem größten Teilungsabstand und dem kleinsten Teilungsabstand maximal 35 %, bevorzugt maximal 15 %, des größten Teilungsabstands beträgt. Diese Begrenzung der unterschiedlichen Teilungsabstände ermöglicht noch ausreichende, bzw. gute Gleichlaufeigenschaften des Kettenrads an sich bzw. in einem erfindungsgemäßen Kettentrieb bei einem ausgewogenen Verhältnis zur entgegengerichteten Schwingungsanregung und Belastungsreduzierung des Kettentriebs.

Um im Vergleich zu unrunden Kettenrädern eine Verminderung der Transversalanregung der Kettentrumme zu ermöglichen, kann der Fußkreis des Zahnkranzes ein kreisförmiges Profil ausbilden, so dass die Zahnlücken jeweils den gleichen Fußkreisradius aufweisen. Dabei kann für ein möglichst gleichmäßiges kreisförmiges Zahnkranzprofil trotz der unterschiedlichen Teilungsabstände der Kopfkreis des Zahnkranzes ein kreisförmiges Profil ausbilden, so dass auch die Zähne den gleichen Kopfkreisradius aufweisen.

Des Weiteren bezieht sich die vorliegende Erfindung auf einen Kettentrieb, insbesondere einen Steuerkettentrieb, mit einer Antriebskette und mindestens einem Kettenrad mit einem kreisförmigen Zahnkranz, der eine Vielzahl von am Umfang des Zahnkranzes verteilt angeordneten einander abwechselnden Zähnen und Zahnlücken sowie unterschiedliche Teilungsabstände aufweist, wobei mehrere aufeinander folgende Teilungsabstände über einen Bereich des kreisförmigen Zahnkranzes kontinuierlich zunehmen und mehrere aufeinander folgende Teilungsabstände in einem nachfolgenden, bevorzugt daran angrenzenden Bereich des kreisförmigen Zahnkranzes kontinuierlich abnehmen. In einem derartigen Kettentrieb lässt sich eine aufgeprägte Schwingungsamplitude deutlich reduzieren. Eine solche Schwingungsamplitude wird beispielsweise in einem Steuerkettentrieb durch die von dem Verbrennungsmotor eingetragene dynamische Belastung des Kettentriebs erzeugt. Ein auf der Kurbelwelle angebrachtes Kettenrad mit unterschiedlichen Teilungsabständen kann in dem Steuerkettentrieb eine Schwingung eintragen, die besonders im Resonanzbereich der Motoranregung eine Schwingungsüberlagerung hervorruft, durch die über Auslöschungseffekte eine Reduzierung der Kettenkräfte und der Resonanzschwingungen realisiert werden. Die Schwingungsüberlagerung kann dabei vorab mittels Simulation auf den Resonanzbereich des Verbrennungsmotors abgestimmt werden. Mit den unterschiedlichen Teilungsabständen des Zahnkranzes verschiebt sich jeweils auch die Winkellage der Zahnlücken, wobei sich bei zunehmenden Teilungsabständen auch der Winkel zwischen zwei angrenzenden Zahnmittellinien bzw. Zahnlückenmittellinien erhöht. Durch eine entsprechend abgestimmte, bevorzugt mittels Simulation, berechnete Abstände lassen sich die unterschiedlichen Teilungsabstände, bzw. die Winkelverschiebung zwischen den Zahnlückenwinkeln, auf eine vorhandene Schwingungscharakteristik anpassen.

Für das Erreichen guter Gleichlaufeigenschaften bei einer ausgewogenen Belastungsreduzierung kann der Unterschied zwischen dem größten Teilungsabstand und dem kleinsten Teilungsabstand maximal 35 %, bevorzugt maximal 15 %, des größten Teilungsabstands betragen. Wird dabei eine herkömmliche Antriebskette verwendet, die eine Vielzahl von Kettengliedern mit im Wesentlichen gleicher Kettenteilung aufweist, dann sind die unterschiedlichen Teilungsabstände bevorzugt kleiner oder gleich der Kettenteilung. Jedoch können bei einer sorgfältigen Auslegung zur Vermeidung von Zwangskräften auch Teilungsabstände vorkommen die größer als die Kettenteilung sind. Bei einer Antriebskette gleicher Kettenteilung lassen sich Standardketten, z.B. Rollen- oder Gelenkketten, verwenden, die neben einer kostengünstigen Herstellung auch eine einfache Montage ohne definierte Kettenpositionen ermöglichen. Teilungsabstände, die kleiner oder gleich der Kettenteilung der zugehörigen Antriebskette sind, verhindern ein Klemmen der Kette auf den Zähnen und damit auch das Entstehen von Zwangskräften.

Eine bevorzugte Ausführungsform sieht vor, dass ein Eingriffsumkreis der Kette auf den Zahnkranz des Kettenrads ein nichtkreisförmiges Profil ausbildet. Der Eingriffsumkreis entsteht durch eine gekrümmte Verbindung der Berührungspunkte der Kette, bzw. der Lage der Gelenkachsen der Kette im Eingriff. Ein derartiges nicht kreisförmiges Profil des Eingriffsumkreises der Kette entsteht trotz eines kreisförmig ausgebildeten Zahnkranzes durch die erfindungsgemäße Anordnung der unterschiedlichen Teilungsabstände.

Im Folgenden wird anhand eines Ausführungsbeispiels die vorliegende Erfindung näher erläutert. Es zeigen
- Fig. 1: eine Draufsicht auf ein erfindungsgemäßes Kettenrad und
- Fig. 2: eine Draufsicht auf einen erfindungsgemäßen Kettenantrieb mit zwei Kettenrädern.

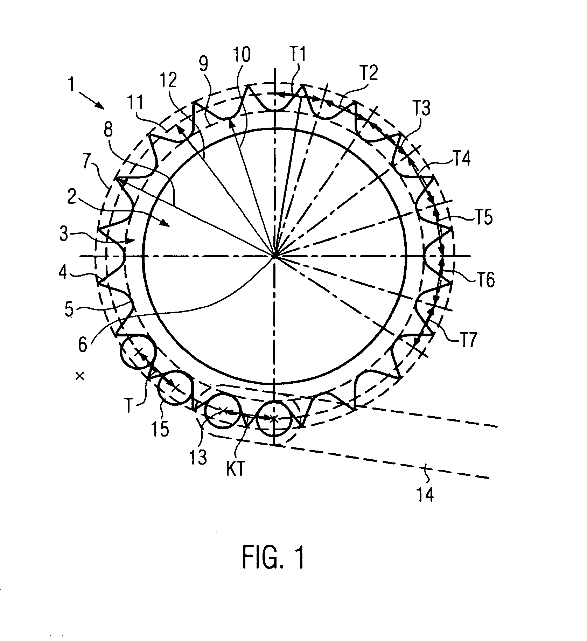

Fig. 1 zeigt eine Ansicht eines erfindungsgemäßen Kettenrads 1 mit einem Nabenteil 2 und einem kreisförmigen Zahnkranz 3. Auf dem Zahnkranz 3 sind eine Vielzahl von um den Umfang des Zahnkranzes 3 verteilt angeordnete, einander abwechselnde Zähne 4 und Zahnlücken 5 angeordnet. Der Mittelpunkt 6 des Kettenrads 1 ist gleichzeitig dessen Drehachse.

Der über die Spitzen der Zähne 4 geführte gekrümmte Umfang bildet den Kopfkreis 7 des Kettenrads 1, wobei der Abstand zwischen der Spitze eines Zahns 4 und dem Mittelpunkt 6 den Kopfkreisradius 8 bildet. Ebenso wird der Fußkreis 9 des Kettenrads 1 durch den gekrümmten Umfang durch den jeweils tiefsten Bereich der Zahnlücken 5 gebildet. Der Fußkreisradius 10 ist entsprechend der Abstand zwischen den tiefsten Punkten der Zahnlücken 5 und dem Mittelpunkt 6 des Kettenrads 1.

Der Teilkreis 11 und der Teilkreisradius 12 des Kettenrads 1 bestimmt sich hier über die gekrümmte Verbindung der Lage der einzelnen Kettengelenkachsen 13 einer Antriebskette 14, hier einer Rollenkette, in der Zahnlücke 5 unabhängig von der Kette 14 und deren Kettenteilung KT zwischen den einander angrenzenden Kettengelenken, d.h. bei einer optimalen Lage des einzelnen Kettengelenks bzw. Gelenkrolle 15 in der Zahnlücke 5. Bildlich dargestellt ergibt sich der Teilkreis 11 durch die gekrümmte Verbindung der Kettengelenkachsen 13 von Gelenkrollen 15 bzw. Gelenkhülsen, die ohne Verbindung zueinander lose in die Zahnlücken 5 eingelegt sind. Dabei sind alle Zahnlücken 5 im Wesentlichen gleich groß und die Gelenkrollen 15 in einer auf die Zahnlücken 5 bezogene optimale Position angeordnet. Der Teilkreisradius 12 ist dann entsprechend der Abstand zwischen der unabhängigen Lage der Kettengelenkachse 13 in der Zahnlücke 5 und dem Mittelpunkt 6 des Kettenrads 1. Daraus ergibt sich ebenfalls der Teilungsabstand T des Kettenrads 1, der sich aus der linearen Entfernung zwischen der unabhängigen Lage der Gelenkachse 13 eines Kettengelenks in der Zahnlücke 5 sowie der unabhängigen Lage der Kettengelenkachse 13 in der nachfolgenden Zahnlücke 5 ergibt. Bei einer gleichmäßigen Form der Zahnlücke 5, d.h. einer spiegelbildlichen Form der Zahnlückenflanken, ergibt sich der Teilungsabstand T auch als Abstand zwischen den Schnittpunkten der Zahnlückenhalbierenden zweier angrenzenden Zahnlücken 5 mit dem Teilkreis 11 des Kettenrads 1. Ist die Antriebskette 14 als Zahnkette ausgebildet ergibt sich der Teilkreis 11 und der Teilkreisradius 12 durch die Kontaktpunkte der Zähne der Zahnkette mit den Flanken der Zahnlücken 5.

Das in Fig. 1 dargestellte Kettenrad 1 weist unterschiedliche Teilungsabstände T1 bis T7 auf. In einem ersten Bereich (T1 bis T4) des kreisförmigen Zahnkranzes 3 nehmen die Teilungsabstände T1 bis T4 stetig zu. Neben einer gleichmäßigen Zunahme für einen gleichmäßigen Anstieg der Kettenkraft ist bei einer besonderen Form des gewünschten Anstiegs der Kettenkraft auch eine ungleichmäßige Zunahme möglich. In dem sich daran anschließenden Bereich (T5 bis T7) des Zahnkranzes 3 nehmen die Teilungsabstände T5 bis T7 beständig ab. Folglich ist T1 kleiner als T2, T2 kleiner als T3 und T3 kleiner als T4. Ebenso ist T5 größer als T6 und T6 größer als T7. Die einander angrenzenden Teilungsabstände T4 und T5 können dabei sowohl beide in etwa gleich groß sein, oder T5 ist kleiner als T4, so dass der Teilungsabstand T4 auch als Teil des zweiten stetig abnehmenden Bereichs des Zahnkranzes 3 angesehen werden kann. Die unterschiedlichen Teilungsabstände des Kettenrads 1 bewirken gleichzeitig auch unterschiedliche Winkel zwischen den Zahnlückenhalbierenden der zugehörigen Zahnlücken, so dass die Abnahme und Zunahme der Teilungsabstände T1 bis T7 analog auch mittels der unterschiedlichen Winkel der Zahnlückenhalbierenden definiert werden kann.

Trotz der unterschiedlichen Teilungsabstände T1 bis T7 ist die Größe und Form der Zahnlücken 5 jeweils gleich. Die Änderung der Teilungsabstände wirkt sich folglich nur auf die Dimensionierung der Zähne 4 aus, die zusammen mit den Teilungsabständen kontinuierlich zunimmt und abnimmt. Die Zahnlücken 5 verschieben sich folglich mit der Änderung der Teilungsabstände bzw. der Winkel der Zahnlückenhalbierenden.

Im Vergleich mit einem herkömmlichen Kettenrad zur Verwendung mit einer Antriebskette 14 mit einer Kettenteilung KT weist das erfindungsgemäße Kettenrad 1 nicht nur einen im Umfang kleineren Teilkreis 11, sondern auch kleinere Kopf- und Fußkreise 7, 9 auf. Daraus folgt, dass der kreisförmige Zahnkranz 3 des Kettenrads 1 insgesamt kleinere Umfangs-Abmessungen hat.

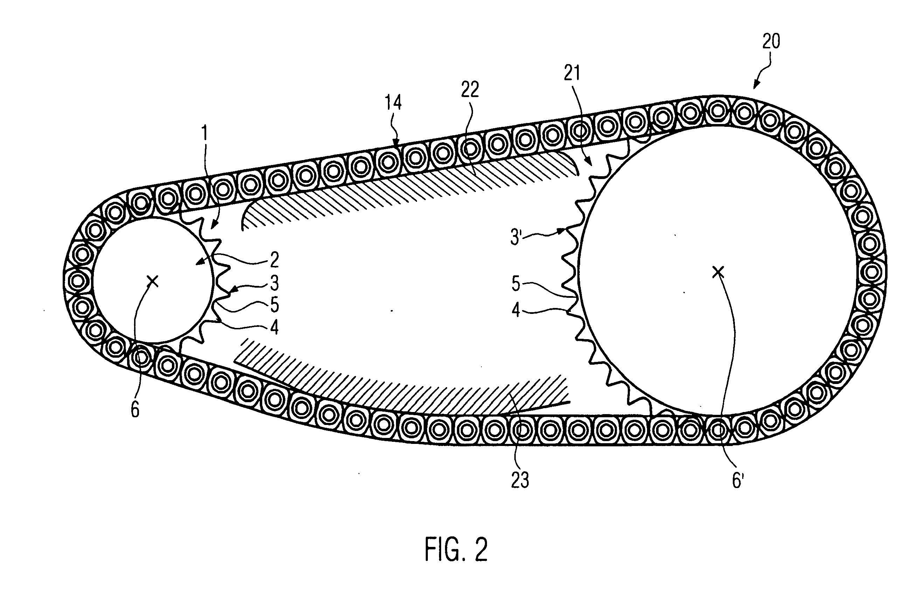

Fig. 2 zeigt einen einfachen Kettentrieb 20 mit zwei Kettenrädern 1, 21 und einer endlosen Antriebskette 14, die um die Kettenräder 1, 21 herum gelegt ist. Im Lastrum der Antriebskette ist eine Führungsschiene 22 vorgesehen, die die Antriebskette 14 zwischen den Kettenrädern 1, 21 unterstützt Im Leertrum der Antriebskette 14 ist weiter eine Spannschiene 23 vorgesehen, durch die die Antriebskette 14 mit einer nach Außen wirkenden konstanten Vorspannung beaufschlagt wird. Die Spannschiene 23 ist zum Aufbringen der Vorspannung entsprechend gelagert (nicht gezeigt), und mit einer Spannvorrichtung (nicht gezeigt) verbunden.

Der in Fig. 2 dargestellte schematische Kettenantrieb 20 kann als minimaler Steuerkettentrieb eines Vier-Zylinder-Verbrennungsmotors dienen. Dabei ist das kleinere Kettenrad 1 mit der Kurbelwelle (nicht gezeigt) des Verbrennungsmotors und das größere Kettenrad 21 mit der Nockenwelle (nicht gezeigt) des Verbrennungsmotors verbunden.

Das Kurbelwellenkettenrad 1 weist entsprechend einen um den Mittelpunkt 6 des Kettenrads angeordneten kreisförmigen Zahnkranz 3 mit nebeneinander angeordneten Zähnen 4 und Zahnlücken 5 auf, wobei erfindungsgemäß die aufeinander folgenden Teilungsabstände über einen ersten Bereich des Zahnkranzes stetig zunehmen und in einem darin angrenzenden Bereich stetig abnehmen. Das Nockenwellen-Kettenrad 21 besitzt demgegenüber einen ebenfalls kreisförmigen Zahnkranz 3', der kreisförmig um den Mittelpunkt 6' des Kettenrads 21 angeordnet ist. Dabei weist der Zahnkranz 3' des Nockenwellenkettenrads 21 im Vergleich zu dem Kurbelwellen-Kettenrad 1 eine doppelte Anzahl von Zähnen 4 und Zahnlücken 5 auf.

Im Betrieb greifen bei einem erfindungsgemäßen Kettentrieb 20 die Gelenkrollen oder - hülsen der Antriebskette 14, die hier als Gelenk- oder Hülsenkette ausgebildet ist, in die Zahnlücken 5 des Kettenrads 1 ein. Bevorzugt ist die Kettenteilung KT zwischen den Gelenkachsen 13 der Kettenglieder der Antriebskette 14 gleich bleibend über die Länge der Kette. Es kann im Bedarfsfall aber auch eine geräuscharme Random-Kette mit leicht unterschiedlichen Kettenteilungen eingesetzt werden. Die unterschiedlichen Teilungsabstände T1 bis T7 des Kettenrads 1 unterscheiden sich von der Kettenteilung KT bzw. einer mittleren Kettenteilung der Antriebskette 14. Neben Teilungsabständen, die in etwa der Kettenteilung KT entsprechen, d.h. dem Nominalwert herkömmlicher Kettenräder, weist das Kettenrad auch kleinere Teilungsabstände T auf. Auch größere Teilungsabstände sind prinzipiell möglich, jedoch ist deren Wirkung gegenüber der nominellen Teilung zu vernachlässigen. Darüber hinaus entstehen bei zu großen Teilungsabständen gegenüber der Kettenteilung KT Zwangskräfte, durch die die Kette 14 von den Zähnen 4 des Kettenrads geklemmt wird, so dass größere Teilungsabstände nur in einem sehr kleinen Maße und einer geringen Übergröße sinnvoll sind. Für sich gesehen variieren die Teilungsabstände T1 bis T7 gegenüber einem mittleren Teilungsabstand üblicherweise um maximal ± 5%. Eine technische Funktionsfähigkeit ist darüber hinaus bis etwa ± 20% gegeben.

Bei dem Eingriff eines Kettengelenks in eine Zahnlücke 5 mit einer kleineren Teilung, z.B. T1 bis T3, T6 und T7, läuft die Kette 14 auf einem gegenüber dem Teilkreis 11 etwas größeren Eingriffsumkreis, da sich das Kettengelenk nicht frei und unabhängig in die Zahnlücke 5 einlegen kann, sondern nur in Verbindung mit den angrenzenden Kettengliedern der Antriebskette 14. Nähert sich der Teilungsabstand T der Zahnlücken 5 dem Nominalwert der Kettenteilung KT der Antriebskette, nähert sich auch der Eingriffsumkreis wieder dem durch die Zahnlücken 5 vorgegebenen nominellen Teilkreis 11. Erreicht der Teilungsabstand T den Wert der Kettenteilung KT, stimmen Teilkreis 11 und Eingriffsumkreis der Kette 14 überein. Bei einem gegenüber der Kettenteilung KT größeren Teilungsabstand T verläuft der Eingriffsumkreis ebenfalls auf dem Teilkreis 11.

Die erfindungsgemäße Ausgestaltung des Kettenrads 1 selbst oder als Teil eines Kettentriebs 20 bewirkt durch die kontinuierliche Zunahme aufeinander folgender Teilungsabstände in einem ersten Bereich des Zahnkranzes und die kontinuierliche Abnahme der Teilungsabstände in einem daran angrenzenden Bereich ein nicht kreisförmiges Profil des Eingriffsumkreises der Kette 14 auf dem kreisförmigen Zahnkranz 3 des Kettenrads 1. Das nicht kreisförmige Profil des Eingriffsumkreises bewirkt durch die auf die Antriebskette 14 aufgeprägte unterschiedliche Kettenkraft eine Schwingungsanregung des Kettentriebs, die bei einer vorhandenen Schwingungsanregung des Kettentriebs, z.B. bei einem Steuerkettentrieb eines Verbrennungsmotors, zur Auslöschung mittels Schwingungsüberiagerung genutzt werden kann. Durch eine derartige entgegen gerichtete Anregung des Kettentriebs 20, die bevorzugt für den Bereich der Resonanzschwingungen ausgelegt ist, kann die auf die Antriebskette 14 wirkende Kettenkraft deutlich verringert werden. Die Auslöschungseffekte durch die Schwingungsüberlagerung reduzieren ebenfalls die Geräuschentwicklung des Kettentriebs 20, insbesondere im Resonanzbereich. Ein erfindungsgemäßes Kettenrad 1 ermöglicht daher neben der Verbesserung des NVH-Verhaltens auch einen Downsizing des Steuerkettentriebs für einen Verbrennungsmotor. Im Gegensatz zu dem im Stand der Technik bekannten unrunden Kettenrädern wird durch ein solches erfindungsgemäßes Kettenrad 1 die transversale Anregung der Kettentrumme vermindert.

Die optimale Abfolge der unterschiedlichen Teilungsabstände, die Abfolge der Teilungsabstände in den verschiedenen Bereichen des Zahnkranzes und die Anordnung der Bereiche zunehmender und abnehmender Teilungsabstände über den Umfang des Zahnkreises sowie die Entscheidung über sich gleichförmig oder ungleichförmig ändemde Teilungsabstände in den jeweiligen Bereichen des Zahnkranzes können in geeigneter Weise mittels einer Simulation so aufeinander abgestimmt werden, dass im Besonderen im Resonanzbereich des Kettentriebs 20 eine möglichst optimale Schwingungsüberlagerung entsteht, so dass sich die ergebenden Auslöschungseffekte bevorzugt in den Bereichen maximaler Schwingungs- und Geräuschanregung einstellen.

## Patentansprüche

1. Kettenrad (1), insbesondere für einen Steuerkettentrieb, mit einem Zahnkranz (3), der eine Vielzahl von am Umfang des Zahnkranzes (3) angeordneten einander abwechselnden Zähnen (4) und Zahnlücken (5) sowie unterschiedliche Teilungsabstände (T) aufweist,
**dadurch gekennzeichnet, dass** der Zahnkranz kreisförmig ist und mindestens drei aufeinanderfolgende Teilungsabstände (T) über einen ersten Bereich des Zahnkranzes (3) kontinuierlich zunehmen und mindestens drei aufeinander folgende Teilungsabstände (T) in einem nachfolgenden Bereich des Zahnkranzes (3) kontinuierlich abnehmen.

2. Kettenrad (1) nach Anspruch 1,
**dadurch gekennzeichnet, dass** erste Bereich des Zahnkranzes (3) und der nachfolgende Bereich des Zahnkranzes einander angrenzen.

3. Kettenrad (1) nach Anspruch 1, oder 2,
**dadurch gekennzeichnet, dass** sich Bereiche des Zahnkranzes (3) mit kontinuierlich zunehmenden Teilungsabständen (T) und Bereiche des Zahnkranzes (3) mit kontinuierlich abnehmenden Teilungsabständen (T) einander abwechseln.

4. Kettenrad (1) nach einem der Ansprüche 1 bis 3,
**dadurch gekennzeichnet, dass** die Bereiche des Zahnkranzes (3) mit kontinuierlich zunehmenden Teilungsabständen (T) und/oder mit kontinuierlich abnehmenden Teilungsabständen (T) mindestens vier unterschiedliche Teilungsabstände (T) aufweisen.

5. Kettenrad (1) nach einem der Ansprüche 1 bis 4,
**dadurch gekennzeichnet, dass** der Unterschied zwischen dem größten Teilungsabstand und dem kleinsten Teilungsabstand maximal 35 %, bevorzugt maximal 15%, des größten Teilungsabstands beträgt.

6. Kettenrad (1) nach einem der Ansprüche 1 bis 5,
**dadurch gekennzeichnet, dass** der Fußkreis (9) des Zahnkranzes (3) ein kreisförmiges Profil aufweist.

7. Kettenrad (1) nach einem der Ansprüche 1 bis 6,
**dadurch gekennzeichnet, dass** der Kopfkreis (7) des Zahnkranzes (3) ein kreisförmiges Profil aufweist.

8. Kettentrieb (20), insbesondere Steuerkettentrieb, mit einer Antriebskette (14) und mindestens einem Kettenrad (1) nach einem der Ansprüche 1 bis 7.

9. Kettentrieb (20) nach Anspruch 8,
**dadurch gekennzeichnet, dass** die Antriebskette (14) eine Vielzahl von Kettengliedern mit im Wesentlichen gleicher Kettenteilung (KT) aufweist, wobei die unterschiedlichen Teilungsabstände (T) des Zahnkranzes (3) kleiner oder gleich der Kettenteilung (KT) sind.

10. Kettentrieb (20) nach Anspruch 8 oder 9,
**dadurch gekennzeichnet, dass** der Eingriffsumkreis der Kette (14) auf dem Zahnkranz (3) des Kettenrads (1) ein nichtkreisförmiges Profil ausbildet.

## Claims

1. A sprocket (1), in particular for a timing chain drive, with a gear ring (3) comprising a plurality of alternating teeth (4) and tooth spaces (5), arranged around the periphery of the gear ring (3), and different pitch spacings (T),
**characterized in that** the gear ring is circular and at least three successive pitch spacings (T) increase continuously over a first region of the gear ring (3), and at least three successive pitch spacings (T) decrease continuously in a subsequent region of the gear ring (3).

2. A sprocket (1) according to claim 1,
**characterized in that** the first region of the gear ring (3) and the subsequent region of the gear ring adjoin one another.

3. A sprocket (1) according to claim 1 or 2,
**characterized in that** regions of the gear ring (3) with continuously increasing pitch spacings (T) and regions of the gear ring (3) with continuously decreasing pitch spacings (T) are arranged in alternate succession.

4. A sprocket (1) according to one of the claims 1 to 3,
**characterized in that** the regions of the gear ring (3) with continuously increasing pitch spacings (T) and/or with continuously decreasing pitch spacings (T) comprise at least four different pitch spacings (T).

5. A sprocket (1) according to one of the claims 1 to 4,
**characterized in that** the difference between the largest pitch spacing and the smallest pitch spacing is not more than 35 %, preferably not more than 15 %, of the largest pitch spacing.

6. A sprocket (1) according to one of the claims 1 to 5,
**characterized in that** the root circle (9) of the gear ring (3) has a circular profile.

7. A sprocket (1) according to one of the claims 1 to 6,
**characterized in that** the addendum circle (7) of the gear ring (3) has a circular profile.

8. A chain drive (20), in particular a timing chain drive, comprising a driving chain (14) and at least one sprocket (1) according to one of claims 1 to 7.

9. A chain drive (20) according to claim 8,
**characterized in that** the driving chain (14) comprises a plurality of chain links having essentially the same chain pitch (KT), wherein the various pitch spacings (T) of the gear ring (3) are smaller than or identical to the chain pitch (KT).

10. A chain drive (20) according to claim 8 or 9,
**characterized in that** the engagement perimeter of the chain (14) on the gear ring (3) of the sprocket (1) defines a non-circular profile.

## Revendications

1. Roue à chaîne (1), en particulier pour une commande à chaîne de distribution, comprenant une couronne dentée (3) qui présente une pluralité de dents (4) et d'entredents (5) alternés agencés sur le pourtour de la couronne dentée (3), ainsi que différents pas (T),
**caractérisée en ce que** la couronne dentée est de forme circulaire et au moins trois de pas successifs (T) sur une première zone de la couronne dentée (3) augmentent continûment et au moins trois pas successifs (T) dans une zone suivante de la couronne dentée (3) diminuent continûment.

2. Roue à chaîne (1) selon la revendication 1,
**caractérisée en ce que** la première zone de la couronne dentée (3) et la zone suivante de la couronne dentée sont adjacentes l'une à l'autre.

3. Roue à chaîne (1) selon la revendication 1 ou 2,
**caractérisée en ce que** des zones de la couronne dentée (3) avec des pas (T) augmentant continûment alternent avec des zones de la couronne dentée (3) avec des pas (T) diminuant continûment.

4. Roue à chaîne (1) selon l'une quelconque des revendications 1 à 3,
**caractérisée en ce que** les zones de la couronne dentée (3) avec des pas (T) augmentant continûment et/ou avec des pas (T) diminuant continûment présentent au moins quatre pas (T) différents.

5. Roue à chaîne (1) selon l'une quelconque des revendications 1 à 4,
**caractérisée en ce que** la différence entre le plus grand pas et le plus petit pas est au maximum de 35 %, de préférence au maximum de 15 %, du plus grand pas.

6. Roue à chaîne (1) selon l'une quelconque des revendications 1 à 5,
**caractérisée en ce que** le cercle de pied de denture (9) de la couronne dentée (3) présente un profil circulaire.

7. Roue à chaîne (1) selon l'une quelconque des revendications 1 à 6,
**caractérisée en ce que** le cercle de tête (7) de la couronne dentée (3) présente un profil circulaire.

8. Transmission par chaîne (20), en particulier commande à chaîne de distribution, comprenant une chaîne d'entraînement (14) et au moins une roue à chaîne (1) selon l'une quelconque des revendications 1 à 7.

9. Transmission par chaîne (20) selon la revendication 8,
**caractérisée en ce que** la chaîne d'entraînement (14) présente une pluralité d'éléments de chaîne un pas de chaîne (KT) sensiblement identique, les pas différents (T) de la couronne dentée (3) étant inférieurs ou égaux au pas de chaîne (KT).

10. Transmission par chaîne (20) selon la revendication 8 ou 9,
**caractérisée en ce que** la périphérie d'engrènement de la chaîne (14) sur la couronne dentée (3) de la roue à chaîne (1) forme un profil non circulaire.
